# DEMANDE DE BREVET EUROPEEN

(11) **EP 0 606 033 A1**
(43) Date de publication de la demande: **13.07.1994**
(21) Numéro de dépôt: 93403189.9
(22) Date de dépôt: 28.12.1993
(51) Int. Cl.: G01K 11/06

(54) **Dispositif témoin de rupture de la chaine de froid destiné à être placé dans une enceinte de conservation**

(30) Priorité: 29.12.1992 FR 9215863
(71) Demandeur: Société à Responsabilité Limitée NOTION DE PROGRES, F-60200 Compiègne (FR)
(72) Inventeur: Girard, Philippe Daniel, F-Magny Les Compiegne (Oise) (FR); Rocca, Philippe Roger, F-Compiegne (Oise) (FR)
(74) Mandataire: Rataboul, Michel Charles

(57) **Abrégé**

Le procédé est destiné à la détection de rupture de la chaîne du froid dans une enceinte de conservation.

Il est caractérisé en ce qu'il consiste à :
. choisir un liquide (26) dont la température de solidification correspond sensiblement au seuil de rupture de la chaîne du froid dans l'enceinte,
. introduire ledit liquide (26) dans un réceptacle unique (12) de forme disymétrique et de volume supérieur à celui du liquide (26) gelé,
. provoquer la solidification du liquide (26) lorsque le réceptacle (12) se trouve dans une position dite "initiale" afin de donner audit liquide (26) une forme spécifique qu'il ne peut conserver que par le maintien de l'enceinte à une température au-dessous du seuil de rupture de la chaîne du froid,
. placer dans l'enceinte de conservation ledit réceptacle (12) contenant le liquide (26) gelé, dans un position différente de la position intiale,
. contrôler le changement de forme et de position du liquide (26) dans le réceptacle (12).

## Description

L'invention concerne un dispositif témoin ainsi qu'un procédé pour la surveillance d'enceintes de conservation telles que des congélateurs, des chambres froides, des camions frigorifiques, etc.

Il s'agit plus particulièrement de contrôler si la chaîne du froid a été maintenue dans de telles enceintes, c'est-à-dire s'il n'y a pas eu d'élévation de température anormale qui abimerait les denrées alimentaires qu'elles contiennent, altèrerait leur aspect (forme coulante, bavures ou changements de couleurs, etc.) voire même les rendrait impropres à la consommation.

On connaît diverses alarmes associées à des enceintes de conservation qui ont pour fonction d'attirer l'attention par exemple, par un témoin lumineux ou sonore, lorsque la température dépasse le seuil maximal acceptable, lorsqu'une porte de l'enceinte reste ouverte assez longtemps ou encore lorsqu'un compresseur ne fonctionne plus ou fonctionne mal.

Cependant, ces alarmes ne se déclenchent, en général, qu'au moment où la hausse de température est enregistrée. Aussi, si l'on est absent lorsque l'élévation de température se produit et que celle-ci redescend par la suite, on n'est pas averti de la rupture de la chaîne du froid qui a alors eu lieu dans l'enceinte.

En fait, on ne dispose à ce jour que de très peu de moyens permettant de vérifier le maintien de la chaîne du froid.

On connaît par exemple, les thermomètres à maximum et à minimum. C'est pratiquement le seul moyen dont on dispose actuellement pour surveiller, globalement, toute une enceinte de conservation.

Bien que ce type de thermomètre permette de connaître les températures maximale et minimale atteintes au cours d'une certaine période de temps dans une enceinte considérée, il est souvent difficile de dire s'il y a eu rupture de la chaîne du froid ou pas.

On connaît aussi les documents suivants :
- FR-A-2 676 532 qui décrit un dispositif composé de deux compartiments identiques, séparés par un étranglement propre à retenir dans le compartiment supérieur un liquide durci par le froid,

Dans sa version la plus simple de ce dispositif, représentée par les figures 4, 5 et 6, le liquide a gelé dans le compartiment inférieur où il se trouve par gravité, situation dans laquelle le dispositif peut être mis en action en le faisant pivoter à la manière d'un sablier.

Dans cette nouvelle position, le liquide gelé est maintenu au-dessus du compartiment inférieur grâce à l'étranglement et quand la température de l'enceinte s'est élevée jusqu'à un degré tel que le liquide est dégelé, ce dernier coule dans le compartiment inférieur, ce qui révèle l'élévation de température.

Tant que le liquide n'est pas solidifié, il ne sert à rien de retourner le dispositif, le liquide revenant toujours dans le compartiment inférieur par gravité.

Quand le liquide est à nouveau solide, on peut retourner utilement le dispositif car, alors, le bloc solidifié est retenu dans le compartiment supérieur par l'étranglement.

Or, rien ne permet de déterminer si le dispositif en place a été retourné ou pas, s'il y a eu élévation de le température de l'enceinte ou pas.

Par conséquent, ce dispositif s'avère sans intérêt car il ne s'oppose pas du tout à la fraude.

Dans une version plus élaborée, le compartiment supérieur comprend en outre un conduit qui prolonge l'étranglement jusqu'au voisinage du fond du compartiment inférieur. Le liquide est placé dans le compartiment supérieur grâce à un orifice de remplissage prévu à cet effet. Une manipulation particulière permet de rendre étanche la base du conduit tant que le liquide n'est pas gelé puis de dégager cette base quand le liquide est solidifié, ce qui autorise la mise en fonction du dispositif en déplaçant les compartiments l'un par rapport à l'autre.

Ici, le liquide ne peut pas être reconduit dans le compartiment supérieur, de sorte que le dispositif fonctionne une seule fois, à la manière d'un fusible. La fraude est détectable mais le dispositif n'est pas réutilisable.
- CH-A-625 618 qui prévoit que les deux compartiments dans lesquels se trouve le liquide témoin sont identiques et séparés par un passage plus ou moins étroit, un peu à la manière d'un sablier.

Ici encore la fraude n'est pas détectable puisqu'il suffit de "retourner le sablier" dès que le liquide s'est solidifié à nouveau.

Cela est un très grave défaut car il est impossible de déterminer quel compartiment était primitivement en haut et l'autre en bas. La tricherie est donc très simple.
- FR-A-2 529 669 qui est du même type que celui du document CH-A-625 618 et qui, par conséquent, appelle les mêmes commentaires.

Outre ces dispositifs, on connaît d'autres moyens permettant de contrôler individuellement les articles congelés.

Le plus répandu consiste en l'utilisation d'une encre spéciale servant de témoin sur chaque emballage d'aliments surgelés. Cette encre change de couleur à une température donnée et ce, de manière irréversible. La température de changement de couleur correspond, bien entendu, à la température maximale acceptable pour la conservation desdits aliments surgelés.

Ce type de témoin doit être appliqué sur chaque objet accompagné, le cas échéant, d'une note explicative. Il présente donc l'inconvénient d'imposer un contrôle individuel de chacun d'entre eux, soit par le distributeur, par exemple à reception des marchandises et au moment de la mise en vente proprement dite, soit par le consommateur lui-même, au moment de son achat. Par conséquent, cette surveillance nécessite une attention toute particulière, que ce soit de la part de l'acheteur-grossiste, du responsable de rayon ou du consommateur et donc un temps de contrôle relativement important puisque celui-ci est propre à chaque article.

Malheureusement, pour des raisons d'économie ou par simple négligence, ce contrôle peut aussi paraître trop fastidieux à certains distributeurs ou grossistes qui ne prendront pas le temps de contrôler individuellement chacun des articles qu'ils mettent en vente. Aussi, seulement certains d'entre eux seront contrôlés, par exemple au hasard ou, dans le pire des cas, aucun d'entre eux. Les lots seront alors mis en vente avec des articles corrects et peut-être d'autres incorrects. Il en résulte un risque important de tromperie de la clientèle, cette tromperie pouvant même être faite tout-à-fait volontairement et consciemment.

En outre, on peut remarquer que la charge de ce type de témoin incombe au fabricant d'articles surgelés, au moment du conditionnement desdits articles.

D'autres fabricants placent un témoin dans chaque paquet surgelé et non plus à l'extérieur de ceux-ci (sur l'emballage) comme décrit précédemment. Ce témoin comprend un liquide eutectique introduit dans un contenant de forme spécifique, une étoile par exemple.

On rappelle ici, qu'un liquide eutectique est un liquide qui, à une température caractéristique dite température eutectique, se transforme en deux phases solides distinctes, de manière irréversible.

Dans ce cas, c'est le consommateur et uniquement ce dernier qui, en ouvrant l'article surgelé, peut apprécier si le témoin présente une forme "normale", c'est-à-dire sa forme initiale, le consommateur pouvant éventuellement être guidé par une note explicative jointe à l'article surgelé.

Outre le fait que l'observation du témoin peut ne pas révèler de manière certaine s'il y a eu ou pas rupture de la chaîne du froid, le consommateur peut se trouver en possession d'aliments impropres à la consommation qu'il aura quand même payés au vendeur. Dans la pratique, ceci est inacceptable.

De plus, le grossiste ou le distributeur ne peut pas contrôler la qualité de ses marchandises, ce qui peut le conduire à mettre en vente, parfois involontairement, des produits périmés.

Dans la pratique, les dispositifs témoins précités ne sont que très rarement utilisés parce qu'ils ne permettent un contrôle qu'en fin de chaîne, c'est-à-dire au niveau du consommateur et/ou parce qu'ils ne sont pas suffisamment fiables.

De plus, on peut noter que les quelques témoins connus ne sont destinés qu'aux produits surgelés, rien n'ayant été développé pour les denrées conservées en froid positif tels que les produits laitiers.

L'invention a pour objectif de fournir un dispositif témoin permettant un contrôle général, sûr et rapide de la chaîne du froid dans toute une enceinte de conservation.

A cette fin, l'invention a pour objet un procédé pour la détection de rupture de la chaîne du froid dans une enceinte de conservation, caractérisé en ce qu'il consiste à :
. choisir un liquide dont la température de solidification correspond sensiblement au seuil de rupture de la chaîne du froid dans l'enceinte,
. introduire ledit liquide dans un réceptacle unique de forme disymétrique et de volume supérieur à celui du liquide gelé,
. provoquer la solidification du liquide lorsque le contenant se trouve dans une position dite initiale afin de donner audit liquide une forme spécifique qu'il ne peut conserver que par le maintien de l'enceinte à une température au dessous du seuil de rupture de la chaîne du froid,
. placer dans l'enceinte de conservation ledit réceptacle contenant le liquide gelé, dans un position différente de la position intiale,
. contrôler le changement de forme et de position du liquide dans le réceptacle.

Selon une caractéristique de ce procédé :
- on monte pivotant le réceptacle autour d'un axe dans l'enceinte de conservation, on provoque la solidification du liquide dans ledit réceptacle et on fait pivoter ledit réceptacle autour de son axe lorsque le liquide est gelé.

L'invention a également pour objet un dispositif témoin pour le contrôle de la rupture de la chaîne du froid dans une enceinte de conservation, caractérisé en ce qu'il comprend un réceptacle unique dont les parties supérieure et inférieure ont des formes différentes contenant un liquide qui possède une température de congélation correspondant sensiblement au seuil de rupture de la chaîne du froid et qui est gelé selon la forme spécifique de la partie du réceptacle qui est inférieure pendant la congélation du liquide et qui est supérieure dans la position dite initiale du réceptacle, le volume dudit réceptacle étant supérieur au volume du liquide gelé.

Selon d'autres caractéristiques de ce dispositif :
- l'intérieur de la partie supérieure du réceptacle se raccorde directement à l'intérieur de la partie inférieure selon toute l'étendue de leur section commune;
- il est monté pivotant autour d'un axe solidaire d'un support placé à l'intérieur d'une enceinte de conservation;
- le réceptacle présente des moyens de maintien du liquide gelé situés dans la partie du réceptacle où ledit liquide gelé se trouve dans la position dite initiale;
- les moyens de maintien consistent en au moins un élément en relief à l'intérieur du réceptacle;
- l'élément en relief, respectivement chaque élément en relief, est un barreau qui s'étend à travers le réceptacle, d'une paroi à une autre;
- le réceptacle présente un volume disymétrique formé par une partie parallélépipédique associée à une partie à section triangulaire;
- le liquide est contenu et gelé initialement dans la partie triangulaire du receptacle, la partie parallélépipédique étant destinée à rester vide lors de l'opération de congélation du liquide et en cours de fonctionnement normal de l'enceinte;
- le réceptacle est monté pivotant autour d'un axe centré sur la partie parallélépipédique dudit réceptacle et solidaire d'un support placé à l'intérieur enceinte de conservation.

L'invention sera mieux comprise à l'aide de la description détaillée ci-après faite en référence au dessin annexé.

Bien entendu, la description et le dessin ne sont donnés qu'à titre d'exemple indicatif et non limitatif.

La figure 1 est une vue schématique en perpective d'un dispositif témoin selon l'invention et dont le réceptacle partiellement rempli d'un liquide est monté pivotant autour d'un axe solidaire d'un support, montrant ledit liquide dans sa position initiale de congélation.

La figure 2 est une vue schématique en perspective du dispositif de la figure 1, montrant ledit dispositif dans sa position de contrôle après pivotement autour de son axe, du réceptacle contenant le liquide gelé.

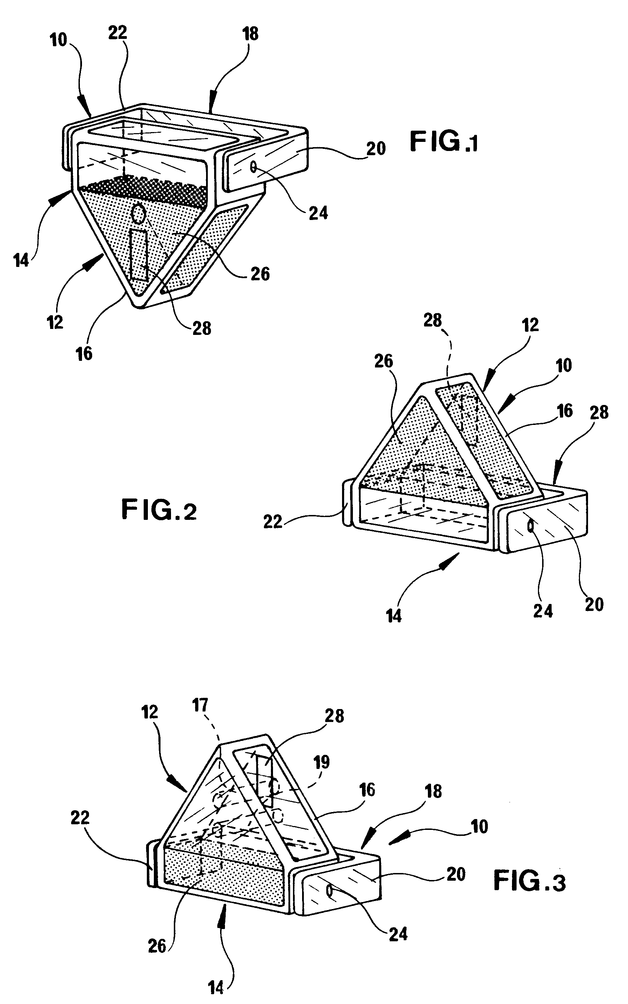

Le figure 3 est une vue schématique en perspective du dispositif de la figure 2, montrant le liquide dans la partie parallélépipédique du réceptacle après rupture de la chaîne du froid et un signal d'alerte dans la partie du réceptacle contenant initialement le liquide gelé.

En se reportant à la figure 1, on voit que le dispositif 10 comprend un réceptacle unique 12 ayant une partie parallélépipédique 14 et une partie à section triangulaire 16, ces deux volumes communiquant entre eux directement, par toute la surface de leur section, c'est-à-dire sans aucun étranglement.

Cette disposition est essentielle si l'on veut disposer d'un dispositif efficace et "franc", ce qui signifie que l'élévation de température est détectée rapidement, sans qu'il soit nécessaire d'attendre que le liquide se dégèle et s'écoule lentement dans la partie inférieure du réceptacle.

Afin de pouvoir solidariser le dispositif 10 à une paroi d'une enceinte de conservation (non représentée), on prévoit une monture 18 qui est, dans le cas considéré ici, en U dont les deux branches 20 et 22 sont destinées à enserrer la partie parallélépipédique 14 du réceptacle 12.

On prévoit également un axe de pivotement 24 s'étendant entre les branches 20-22 de la monture 18 et sensiblement centré sur la partie parallélépipédique 14 du réceptacle 12.

On introduit dans la réceptacle 12, une fois pour toutes, un liquide 26 tel que décrit ci-dessus.

La dispositif témoin 10 est ainsi prêt à l'emploi et on peut donc procéder à sa mise en place dans l'enceinte de conservation que l'on souhaite surveiller. Pour cela, on fixe à l'une des parois intérieures de ladite enceinte, le support 18 de manière à permettre le pivotement du réceptacle 12 autour de l'axe 24.

On positionne tout d'abord, le réceptacle 12 de sorte que la partie prismatique triangulaire 16 se trouve vers le bas, comme représenté sur la figure 1. Par suite, le liquide 26 se place dans ladite partie triangulaire 16 et on provoque sa solidification par congélation dans cette position.

Lorsque le liquide 26 est complètement congelé, on fait pivoter le réceptacle 12 autour de l'axe 24 de manière à positionner vers le haut la partie prismatique triangulaire 16 contenant le liquide gelé 26, comme le montre la figure 2.

Dans cette position, le liquide gelé 26 a la forme d'un volume à section triangulaire dont un sommet est en haut du réceptacle et dont un côté est en bas de la partie triangulaire 16, pratiquement au niveau de la section commune aux deux parties respectivement parallélépipédique 14 et triangulaire 16.

Le liquide gelé 26 est donc totalement libre de tomber d'un bloc dans la partie parallélépipédique 14 s'il subit des contraintes opposées aux forces qui le maintiennent suspendu, à savoir essentiellement les frottements entre lui et les parois de la partie triangulaire 16. Or, il faut éviter cette chute qui pourrait être interprétée comme étant le signe d'une élévation de température (même si le liquide a gardé sa forme de bloc congelé) alors qu'elle pourrait n'être due qu'à des vibrations, par exemple.

Pour éviter cela, on peut prévoir des moyens aidant au maintien du liquide congelé 26 dans la partie prismatique triangulaire 16.

Il peut s'agir par exemple d'au moins un élément en relief des parois de la partie triangulaire 16.

Sur la figure 3, on a représenté un exemple de tels éléments en reliefs qui consistent en deux barreaux 17 et 19 qui s'étendent dans la partie triangulaire 16, transversalement à celle-ci, d'une paroi à une autre.

Ainsi, les barreaux 17 et 19 sont pris dans le liquide 26 et l'empêchent de tomber tant qu'il n'est pas dégelé ou, plus précisément, tant que l'élévation de température n'a pas nettement ramoli le bloc gelé au point qu'il tombe dans la partie parallélépipédique 14 en fondant, en se disloquant autour des barreaux 17 et 19.

Le dispositif témoin 10 relevé dans la position de la figure 2 est alors en position de fonctionnement. On peut ainsi contrôler de manière sûre et rapide le maintien de la chaîne du froid dans l'enceinte en constatant simplement que le liquide gelé 26 est toujours dans la partie prismatique 16 du réceptacle 12.

Si d'aventure le liquide congelé 26 tombait dans la partie parallélépipédique 14 tout en gardant sa forme prismatique intiale (notamment en l'absence de moyens de maintien) cela signifierait qu'il n'y a pas nécessairement eu rupture de la chaîne du froid mais simple translation du "pavé glacé" 26 sous l'effet de son poids.

Par contre, si l'on voit le dispositif 10 dans la situation représenté sur la figure 3, c'est qu'il y a eu rupture de la chaîne du froid puisque le liquide 26 est tombé et a pris la forme parallélépipédique de la partie 14, qu'il soit sous forme liquide ou qu'il ait été recongelé car, alors, il ne peut plus reprendre la forme triangulaire qui lui est nécessaire pour se trouver dans la partie 16.

En effet, le liquide gelé 26 ne peut passer dans le compartiment parallélépipèdique 14 et donc changer de forme que par un retour à une phase liquide. Or, le retour à une phase liquide signifie qu'il y a eu dans l'enceinte une élévation de température au dessus du seuil acceptable défini au préalable selon les articles conservés. Cela permet donc de constater la rupture de la chaîne du froid.

Selon les cas, une température correcte peut être rétablie au moment du contrôle et le liquide est à nouveau gelé au moment du contrôle mais a alors une forme parallélépipédique et non plus une forme prismatique à section traingulaire.

Dans le cas d'un liquide eutectique, en plus, il ne présente pas le même aspect qu'après l'opération de solidification initiale.

Bien entendu, si la température correcte n'est pas rétablie, le liquide 26 subsiste à l'état liquide dans la partie parallélépipédique 14 du réceptacle 12.

Selon l'invention, en fonction de la forme du réceptacle choisi, on peut constater la rupture de la chaîne du froid soit par changement de position et changement d'état du liquide dans le réceptacle, soit par un changement de position dudit liquide congelé accompagné d'un changement de forme du "pavé gelé".

La figure 3 montre également que le passage du liquide gelé 26 de la partie prismatique 16 à la partie parallélépipédique 14 laisse apparaître un signal d'alerte 28 servant à accroître encore la facilité et la rapidité de la constatation de la rupture de la chaîne du froid. Ici, il s'agit d'un graphisme en forme de point d'exclamation mais, bien entendu, tout autre signal peut être appliqué sur le réceptacle 12 au niveau de la partie devant contenir normalement le liquide gelé 26, ici la partie supérieure triangulaire 16.

Une fois la température correcte rétablie dans l'enceinte, on peut procéder à nouveau à la congelation du liquide 26 en donnant au dispositif 10 la position de la figure 1, puis en remettant celui-ci en position de contrôle illustrée par la figure 2, en faisant pivoter le réceptacle 12 autour de l'axe 24.

Le dispositif selon l'invention est donc réutilisable indéfiniment et représente un très faible investissement compte tenu du modeste prix de vente possible. Il est à la fois très petit et nettement visible, ce qui lui donne de très grandes facilités d'emploi.

Selon le mode de réalisation que l'on vient de décrire en référence aux figures 1 à 3, on peut prévoir également que le réceptacle 12 soit amovible par rapport aux branches 20-22 afin de pouvoir le remplacer si celui-ci présente, par exemple, un défaut de fonctionnement résultant, par exemple, d'une cassure et de la fuite du liquide 26.

On peut remarquer que, selon l'invention, le grossiste ou le distributeur qui voudrait volontairement dissimuler une rupture de la chaîne du froid, ne peut substituer au dispositif d'origine un dispositif nouveau, indiquant un fonctionnement acceptable. Il ne peut donc y avoir tromperie, grâce à la solidarisation du dispositif témoin à l'enceinte, par fixation à l'intérieur de celle-ci.

Cette solidarisation peut, bien entendu, être obtenue par tout moyen connu et, en particulier, en utilisant un substrat auto-adhésif par lequel le dispositif peut être appliqué contre la face intérieure transparente d'une partie de l'enceinte à surveiller.

Le dispositif de l'invention doit être placé dans une zone de l'enceinte ou reigne une température significative.

On peut choisir un liquide 26 coloré, plus facile à repérer au travers des parois transparentes du réceptacle 12 ou encore un liquide eutectique dont la décongélation puis la recongélation laissent apparaître deux phases solides différentes non visibles initialement, après l'unique étape de solidification d'origine.

Dans la pratique, le cas le plus difficile à déceler est, bien entendu, celui où il y a eu rupture de la chaîne du froid puis retour à une température normale dans l'enceinte car au moment du contrôle, la température est correcte et on ne sait pas s'il y a eu auparavant une élévation de température ou pas. Le dispositif témoin selon l'invention est particulièrement adapté à cette situation car, même si le liquide 26 est gelé, il ne se trouvera plus dans la partie 16 du réceptacle 12 mais dans la partie parallélépipédique 14 qui ne contenait initialement que de l'air.

Si le liquide 26 se trouve dans la partie parallélépipédique 14 et n'est pas gelé, c'est que non seulement il y a eu rupture de la chaîne du froid mais en outre, la température de l'enceinte de conservation n'est pas redescendue au degré imposé.

## Revendications

**1/** Procédé pour la détection de rupture de la chaîne du froid dans une enceinte de conservation, caractérisé en ce qu'il consiste à :
. choisir un liquide (26) dont la température de solidification correspond sensiblement au seuil de rupture de la chaîne du froid dans l'enceinte,
. introduire ledit liquide (26) dans un réceptacle unique (12) de forme disymétrique et de volume supérieur à celui du liquide (26) gelé,
. provoquer la solidification du liquide (26) lorsque le réceptacle (12) se trouve dans une position dite "initiale" afin de donner audit liquide (26) une forme spécifique qu'il ne peut conserver que par le maintien de l'enceinte à une température au-dessous du seuil de rupture de la chaîne du froid,
. placer dans l'enceinte de conservation ledit réceptacle (12) contenant le liquide (26) gelé, dans un position différente de la position intiale,
. contrôler le changement de forme et de position du liquide (26) dans le réceptacle (12).

**2/** Procédé selon la revendication 1, caractérisé en ce que l'on monte pivotant le réceptacle (12) autour d'un axe (24) dans l'enceinte de conservation, on provoque la solidification du liquide (26) dans ledit réceptacle (12) et on fait pivoter ledit réceptacle (12) autour de son axe (24) lorsque le liquide (26) est gelé.

**3/** Dispositif témoin pour le contrôle de la rupture de la chaîne du froid dans une enceinte de conservation, caractérisé en ce qu'il comprend un réceptacle unique (12) dont les parties supérieure et inférieure (14-16) ont des formes différentes contenant un liquide (26) qui possède une température de congélation correspondant sensiblement au seuil de rupture de la chaîne du froid et qui est gelé selon la forme spécifique de la partie du réceptacle (16) qui est inférieure pendant la congélation du liquide (26) et qui est supérieure dans la position dite initiale du réceptacle (12), le volume dudit réceptacle (12) étant supérieur au volume du liquide (26) gelé.

**4/** Dispositif selon la revendication 3, caractérisé en ce que l'intérieur de la partie supérieure (16) du réceptacle (12) se raccorde directement à l'intérieur de la partie inférieure (14) selon toute l'étendue de leur section commune.

**5/** Dispositif selon la revendication 3, caractérisé en ce qu'il est monté pivotant autour d'un axe (24) solidaire d'un support (18) placé à l'intérieur d'une enceinte de conservation.

**6/** Dispositif selon la revendication 3, caractérisé en ce que le réceptacle (12) présente des moyens de maintien du liquide (26) gelé situés dans la partie (16) du réceptacle (12) où ledit liquide (26) gelé se trouve dans la position initiale.

**7/** Dispositif selon la revendication 6, caractérisé en ce que les moyens de maintien consistent en au moins un élément en relief (17-19) à l'intérieur du réceptacle (12).

**8/** Dispositif selon la revendication 7, caractérisé en ce que l'élément en relief, respectivement chaque élément en relief, est un barreau (17-19) qui s'étend à travers le réceptacle (12), d'une paroi à une autre.

**9/** Dispositif selon la revendication 3, caractérisé en ce que le réceptacle (12) présente un volume disymétrique formé par une partie parallélépipédique (14) associée à une partie (16) à section triangulaire.

**10/** Dispositif selon la revendication 9, caractérisé en ce que le liquide (26) est contenu et gelé initialement dans la partie triangulaire (16) du receptacle (12), la partie parallélépipédique (14) étant destinée à rester vide lors de l'opération de congélation du liquide (26) et en cours de fonctionnement normal de l'enceinte.

**11/** Dispositif selon la revendication 9, caractérisé en ce que le réceptacle (12) est monté pivotant autour d'un axe (24) centré sur la partie parallélépipédique (14) dudit réceptacle (12) et solidaire d'un support (18) placé à l'intérieur d'une enceinte de conservation.
